# FASCICULE DE BREVET EUROPEEN

(11) **EP 2 387 454 B1**
(45) Date de publication et mention de la délivrance du brevet: **03.07.2013**
(21) Numéro de dépôt: 09805793.8
(22) Date de dépôt: 28.12.2009
(51) Int. Cl.: B01F 3/02, B01F 5/00, B01F 15/00, B01F 15/04, G05D 11/13

(54) **DISPOSITIF MELANGEUR D'AU MOINS DEUX CONSTITUANTS GAZEUX**
MISCHVORRICHTUNG ZUM MISCHEN MINDESTENS ZWEIER GASFÖRMIGER KOMPONENTEN
MIXING DEVICE FOR MIXING AT LEAST TWO GASEOUS COMPONENTS

(30) Priorité: 30.12.2008 FR 0859108
(43) Date de publication de la demande: 23.11.2011
(73) Titulaire: Akhea, 26270 Loriol (FR)
(72) Inventeur: MUSSOT, Jean-Luc, F-26270 Loriol (FR)
(74) Mandataire: Novagraaf Technologies
(86) Numéro de dépôt international: PCT/FR2009/052706
(87) Numéro de publication internationale: WO 2010/076529

(56) Documents cités:
- FR-A1- 2 906 480
- GB-A- 1 130 692
- GB-A- 1 344 712
- GB-A- 2 076 676
- US-A1- 2008 106 968
- US-A1- 2008 165 616

## Description

La présente invention a pour objet un dispositif mélangeur d'au moins deux constituants gazeux pour obtenir un mélange gazeux contenant une proportion prédéterminée voulue de chacun desdits constituants gazeux.

Le secteur technique de l'invention est la réalisation de tels dispositifs mélangeurs, appelés également sous la dénomination « mélangeurs de gaz » dont il existe de nombreux types ayant fait l'objet dans certains cas de dépôts de demandes de brevet.

Une première famille regroupe les dispositifs dits statiques constitués d'une enceinte dans laquelle on injecte une quantité déterminée de chaque constituant gazeux et que l'on agite ensuite pour obtenir un mélange homogène : ce type de dispositif ne permet pas, d'une part d'obtenir le mélange voulu immédiatement ni en continu et, d'autre part, nécessite la mise en oeuvre de moyens importants.

Une autre famille de dispositifs dits dynamiques consiste à injecter des débits asservis à des mesures directes du taux de chaque constituant dans le mélange obtenu. Pour cela on utilise souvent des débitmètres et des régulateurs électroniques de débits massiques, ce qui a l'inconvénient de rendre ce type de mélangeur très coûteux.

Enfin, une autre famille de dispositifs, également dynamiques, consiste à mélanger des débits définis et continus de chaque constituant gazeux délivré à travers une branche de circuit pneumatique comportant successivement un détendeur pour alimenter ledit constituant à une pression donnée fixe, puis un orifice d'étranglement calibré pour obtenir un débit déterminé, et aboutissant à une canalisation commune avec les autres constituants gazeux: un perfectionnement de ce type de dispositif tel que décrit dans la demande FR 2 906 480 déposé le 2 octobre 2006, comporte de plus un moyen d'arrêt en amont de chaque orifice calibré de débit de façon à ajuster la quantité injectée de chaque constituant par un pilotage du temps d'ouverture et de fermeture de chaque moyen d'arrêt.

Cependant, ces divers dispositifs ont chacun des inconvénients telle que la réalisation de circuits assez complexes à mettre en oeuvre avec de nombreuses connections et conduits à connecter entre les différents composants pneumatiques, ou l'influence des composants situés en amont des autres et qui perturbent ainsi le fonctionnement de ceux placés en aval.

Les objectifs de la présente invention sont de réaliser des dispositifs mélangeurs qui soient modulaires et compacts, réduisant les connections et limitant l'influence des composants en amont sur les composants en aval pour obtenir au moins un, et plus, mélange homogène de proportions données constantes d'au moins deux constituants gazeux.

Un tel objectif est atteint par un dispositif mélangeur comportant au moins deux branches de circuit pneumatique disposées en parallèle et aptes à recevoir chacune un constituant gazeux à une pression d'alimentation donnée, et à alimenter une ligne de sortie commune du mélange voulu ; un tel dispositif est tel que
- chaque branche comporte un moyen de régulation du débit du constituant considéré à une valeur constante déterminée dépendant au moins de la pression d'alimentation du constituant,
- chaque branche est réalisée dans un bloc polyèdre en matériau étanche aux divers constituants gazeux et résistant à leur pression d'alimentation, comportant au moins deux faces planes opposées où débouchent des collecteurs d'entrée et/ou de sortie au moins de la partie du circuit pneumatique constituant ladite branche,
- lesdits blocs polyèdres de chaque branche sont réunis par assemblage d'une face plane de l'un contre une face plane de l'autre en faisant communiquer des orifices de collecteurs de sortie commune desdites branches.

Ces caractéristiques, bien que réalisées différemment, sont enseignées dans le document GB A 1 130 692.
- le dispositif suivant l'invention comporte de plus au moins un moyen d'arrêt pilotable en fermeture et ouverture placé en aval du moyen de régulation du débit de tout constituant gazeux, lequel moyen d'arrêt (8) est une électrovanne fixée directement sur une face adjacente à l'une des faces planes (6) où débouchent les collecteurs d'entrée et de sortie (7) dudit bloc (11), et reliée à une entrée (13e) et une sortie (13s) secondaires de la partie de branche (1) considérée.

Dans un mode préférentiel de réalisation chaque branche comporte en aval de son moyen de régulation de débit un moyen d'arrêt pilotable en durées de fermeture et d'ouverture en fonction au moins de la pression d'alimentation du moyen de régulation de débit placé en amont sur la même dite branche, les temps d'ouverture et de fermeture de chaque moyen d'arrêt étant variables, aptes à ajuster la quantité injectée de chaque constituant dans la ligne de sortie commune du mélangeur et calculée en fonction du mélange désiré dans cette ligne.

Dans un mode spécifique de réalisation les parties de circuit internes à chaque bloc sont des conduits rectilignes percés depuis les différentes faces du bloc considéré et dont les orifices sont aptes soit à être bouchés soit à constituer des entrées ou sorties de la partie de circuit interne considéré, et le moyen de réglage de la pression d'alimentation ainsi que le moyen de régulation de débit sont intégrés audit bloc.

De préférence, chaque bloc polyèdre est un parallélépipède rectangle et comporte au moins une entrée d'alimentation d' un constituant gazeux et au moins deux sorties de celui-ci aptes à fournir au moins deux débits différents de ce même constituant gazeux dans deux lignes de sortie distinctes et communes avec au moins un autre bloc alimenté par un deuxième constituant gazeux et permettant de délivrer ainsi au moins deux mélanges de constitution de gaz différente.

Le résultat est un nouveau dispositif mélangeur de constituants gazeux répondant aux divers inconvénients des dispositifs actuels et permettant de répondre aux objectifs de la présente invention, tout en apportant des avantages additionnels que l'on notera et comprendra à la lecture de la description ci-après.

Celle-ci et les dessins joints décrivent des exemples de réalisation de l'invention mais n'ont aucun caractère limitatif : d'autres réalisations sont possibles dans le cadre de la portée et de l'étendue de cette invention, en particulier en changeant la forme des blocs polyèdres représentés ici sous forme de parallélépipède rectangle ; ces blocs pourraient être en effet par exemple de section triangulaire, hexagonale ou octogonale et non pas rectangulaire ;de plus on peut réaliser des mélangeurs de plus de deux ou trois constituants gazeux en combinant autant de blocs que nécessaire.
La figure 1 est un schéma d'un mode de réalisation avec un seul moyen d'arrêt commun en sortie.
Les figures 2 et 3 représentent deux schémas de deux modes de réalisation avec un moyen d'arrêt pilotable en fermeture et ouverture placé sur chaque branche de circuit.
La figure 4 est une vue schématique d'un exemple de bloc polyèdre suivant l'invention.
La figure 5 est une vue perspective en semi-éclaté d'un mode de réalisation d'un tel bloc.
La figure 6 est une vue en perspective externe, de trois blocs suivant la figure 5 et assemblés les uns contre les autres, réalisant un dispositif mélangeur de trois constituants gazeux.

Un tel dispositif mélangeur d'au moins deux constituants gazeux comporte au moins deux branches 1 de circuit pneumatique disposées en parallèle et aptes à recevoir 3 chacune un constituant gazeux à une pression P_{E} d'alimentation donnée et à alimenter une ligne de sortie 2 commune du mélange voulu. Suivant l'invention et la représentation des figures jointes :
- chaque branche comporte un moyen de régulation 4 du débit du constituant considéré à une valeur constante déterminée dépendant au moins de la pression P_{A} d'alimentation du constituant,
- chaque branche 1 est réalisée dans un bloc 11 polyèdre en matériau étanche aux divers constituants gazeux et résistant à leur pression d'alimentation, comportant au moins deux faces planes opposées 6 où débouchent des collecteurs 7 d'entrée et/ou de sortie au moins de la partie du circuit pneumatique constituant ladite branche 1.

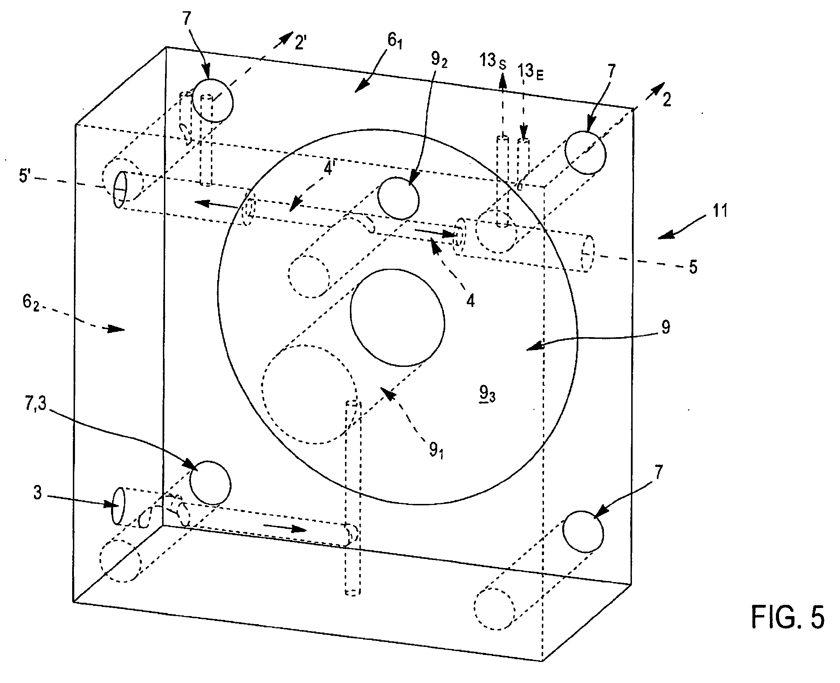

Comme illustré par la figure 5, tous les conduits et collecteurs de ce circuit pneumatique sont réalisés par perçage du bloc 11 depuis l'une de ses faces : ces perçages peuvent se croiser entre eux et/ou déboucher dans un composant intégré au bloc 11 (voir ci-après) quand il est nécessaire de les faire communiquer. Les extrémités de ces perçages, débouchant sur une ou deux faces du bloc 11, sont soit obturées suivant le circuit interne de circulation pneumatique voulu, soit directement connectées à un composant externe du bloc considéré ou à une autre extrémité d'un perçage d'un autre bloc adjacent(tel que décrit au paragraphe suivant), soit reçoivent pour au plus deux d'entre elles d'une part la connexion d'alimentation du constituant gazeux et d'autre part suivant le cas celle de sortie du mélange obtenu.

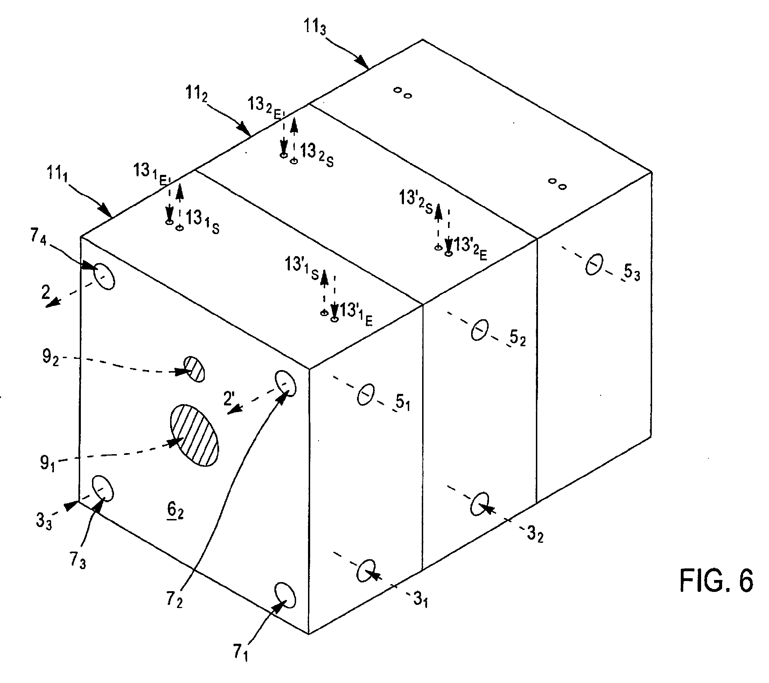

Lesdits blocs polyèdres 11 de chaque branche 1 sont réunis par assemblage comme représenté sur la figure 6 d'une face plane 6 de l'un contre une face plane 6 de l'autre en faisant communiquer des orifices de collecteurs 7 de sortie commune desdites branches, et également suivant le cas d'entrée d'alimentation d'un autre constituant gazeux que celui du bloc considéré et qui peut ainsi alimenter un bloc différent de celui ci comme illustré par l'entrée 7₃ du bloc 11₁ qui va ainsi alimenter 3₃ le bloc 11₃ (alors que le bloc 11₁ peut être alimenté par soit l'entrée 3₁ latérale soit par l'autre collecteur 7₁ de la face 6₂ et qui est obturé à son autre extrémité par rapport au bloc 11₂ qui lui est alors alimenté par l'entrée 3₂).

Le dispositif comporte au moins un moyen d'arrêt 8 pilotable en fermeture et ouverture par tout moyen 14 d'une part de mesure et de comparaison d'au moins la pression et d'autre part de commande ; le moyen d'arrêt est placé en aval du moyen de régulation 4 du débit de tout constituant gazeux.

Le fait de disposer le moyen d'arrêt 8 en aval du moyen de régulation 4 permet de maîtriser la pression d'alimentation P_{A} en amont de cet organe de réglage du débit alors que quand ce moyen d'arrêt est placé en amont de celui-ci, il introduit une perte de charge difficilement appréciable et qui peut donc modifier le débit de cet organe de réglage.

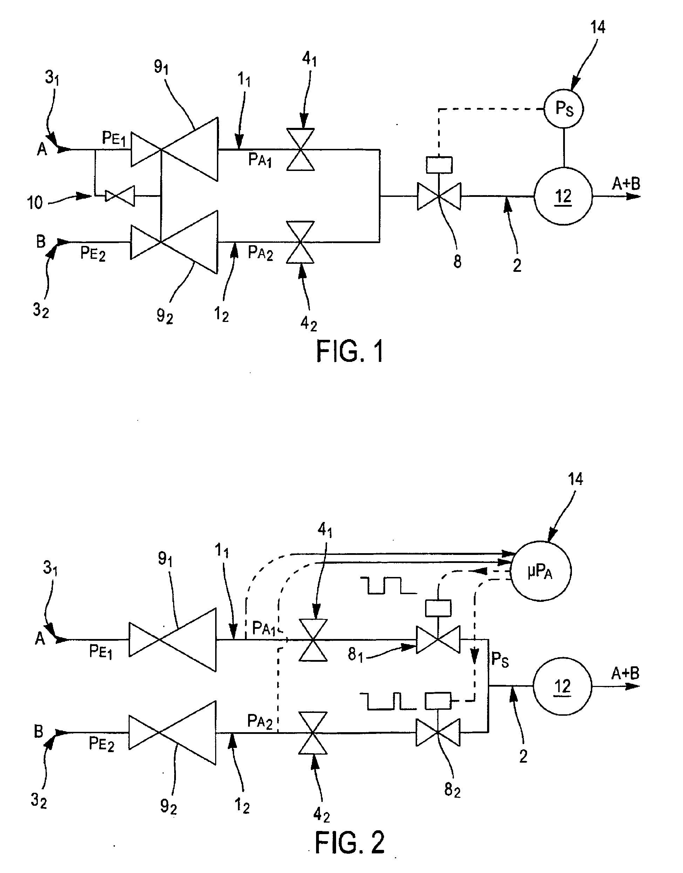

Suivant la représentation de la figure 1, chaque branche 1 comporte en amont du moyen de régulation 4 du débit dans cette branche, un moyen de réglage 9 de la pression P_{A} d'alimentation de celui-ci, et un moyen de pilotage 10 de ce moyen de réglage en fonction de la pression d'entrée P_{E} du constituant gazeux dans ce moyen de réglage de la pression ; lesdits moyens de réglage 9 et de pilotage 10 sont aptes à fournir une pression donnée P_{A} d'alimentation du moyen de régulation de débit 4 situé en aval : ainsi chaque constituant A ou B gazeux, alimenté par chaque branche 1₁, 1₂, débouche dans une ligne de sortie 2 commune avec, chacun, un débit donné, et il suffit alors d'un seul moyen d'arrêt commun 8 sur cette ligne de sortie, pilotable lui-même par un dispositif 14 de mesure de la pression d'un volume tampon 12 placé en aval, et permettant d'alimenter celui-ci et de le maintenir toujours à une pression minimum donnée pour l'utilisation finale F.

Dans un mode préférentiel de réalisation chaque moyen de régulation 4 de débit, et il en est de même dans tous les autres modes de réalisation décrits ci-après, est un ajutage de restriction de la section de passage du circuit de la branche 1 considérée et est apte à assurer un débit sonique qui est seulement fonction de sa pression amont P_{A} d'alimentation : un exemple de réalisation d'un tel composant pneumatique est décrit dans la demande de brevet FR 2 906 590 déposée le 2 octobre 2006, dans lequel l'ajutage de restriction 15 de la section de passage du circuit peut être lui-même réglable pour adapter le débit voulu à la pression amont prédéterminée ; ce réglage étant fait pour chaque condition d'utilisation donnée et normalement non modifiable en cours d'utilisation même si dans certains cas ce pourrait être envisageable.

Pour que les ajutages de restriction de la section de passage du circuit de la branche 1 considérée assurent des débits soniques, pour éviter une influence de la pression aval, il faut que les circuits dont ils font partie soient configurés pour assurer un régime critique et surcritique tel que le rapport de pression amont P_{A} sur la pression aval P_{S} soit inférieur à 0,53 pour les gaz diatomiques, ce qui peut être contrôlé par une prise de mesure de la pression de sortie P_{S}.

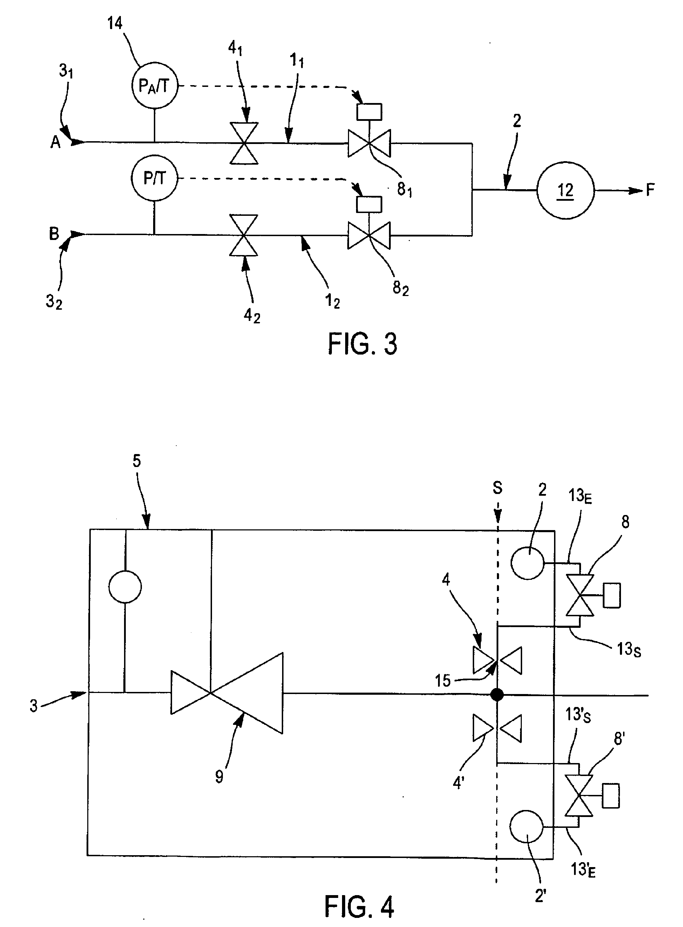

Suivant les figures 2 et 3, chaque branche 1 comporte en aval de son moyen de régulation de débit 4 un moyen d'arrêt 8 pilotable, en durées de fermeture et d'ouverture, par tout moyen 14 de mesure et de comparaison au moins de la pression P_{A} et de commande tel que par un microprocesseur, en fonction au moins de la pression d'alimentation P_{A} du moyen de régulation 4 de débit placé en amont sur la même dite branche ; les temps d'ouverture et de fermeture de chaque moyen d'arrêt sont variables, aptes à ajuster la quantité injectée de chaque constituant dans la ligne 2 de sortie commune du mélangeur et calculés en fonction du mélange désiré dans cette ligne.

Ces moyens 14 de mesure et de comparaison au moins de la pression P_{A} amont d'alimentation permettent donc d'ajuster les durées et fréquences d'ouverture et de fermeture des moyens d'arrêt 8 et donc de contrôler les débits obtenus que l'on veut constants pour chaque constituant gazeux afin d'avoir de façon continue un mélange gazeux final, dans la ligne commune 2 de sortie, de composition stable, même s'il y a des variations de pressions P_{A} en amont des régulateurs de débit 4. Ceci permet d'éviter d'avoir un pilotage des moyens de réglage 9 de la pression P d'alimentation de chaque constituant, tel que représenté sur la figure 2, ou même de ne pas avoir de moyen de réglage 9 de la pression P, comme représenté sur la figure 3.

Pour avoir bien entendu une meilleure précision de pilotage de ces moyens d'arrêt 8, il est utile et même nécessaire d'avoir une mesure non seulement de la pression mais également de la température du constituant gazeux et d'en tenir compte dans le moyen de pilotage 14.

De préférence, chaque moyen de réglage 9 de la pression d'alimentation des moyens de régulation 4 du débit est un détendeur, lequel peut être intégré sur une face des blocs 11 tel que représenté sur les figures 5 et 6 où ne sont représentées que shématiquement les parties 9₁ d'entrée et 9₂ de sortie du détendeur (qui sont bien sûr obturées à leur extrémité débouchant sur la face 6₂ du bloc 11) du détendeur 9 avec le logement 9₃ de sa membrane 9₃

Sur la figure 6 les deux détendeurs des blocs 11₂ et 11₃ sont disposés face à face lors de l'assemblage des deux blocs de chaque branche de chaque constituant considéré.

Les moyens d'arrêt 8 pilotables en fermeture et ouverture sont de préférence des électrovannes fixées directement chacune sur une face adjacente à l'une des faces planes 6 où débouchent les collecteurs d'entrée et de sortie 7 du bloc 11 de la branche de circuit pneumatique 1 dont elles font partie, et reliées à une entrée 13_{E} et une sortie 13_{S} secondaires de cette partie de branche 1, telle que représentée sur le schéma de la figure 4 et, pour ce qui concerne la représentation des entrées-sorties secondaires, sur les figures 5 et 6.

Les moyens de régulation de débit 4 peuvent être réglables comme indiqué précédemment (pour une utilisation donnée afin d'obtenir un mélange déterminé) depuis un accès extérieur 5 percé et situé dans l'axe de leur ajutage 15.

La présente invention permet donc d'assembler comme représenté sur la figure 6, trois blocs ensemble ce qui est facilité par la modularité des blocs, et de réaliser un mélangeur trois voies et, avec des sorties 2 et 2' communes indépendantes (grâce à des collecteurs communiquant 7₂ et 7₄), deux mélanges ternaires de composition différentes. On pourrait également réaliser des mélangeurs de plus de trois composants gazeux en rajoutant autant de blocs que nécessaire.

Pour réaliser un mélangeur complet il faut bien sûr rajouter ensuite sur cet assemblage de blocs tout leurs composants externes tels que les électrovannes d'arrêt 8, des capteurs de pression directement sur les orifices disponibles (et qui sont obturées alors par ces capteurs) des différents collecteurs (tels que ceux d'entrées et sorties 7 communs), une carte électronique pour gérer en fonction de ces mesures de pression et de celles de température les électrovannes de régulation de débit de chaque composant pour obtenir les mélanges gazeux voulus.

## Revendications

1. Dispositif mélangeur d'au moins deux constituants gazeux comportant au moins deux branches (1) de circuit pneumatique disposées en parallèle et aptes à recevoir (3) chacune un constituant gazeux à une pression (P_{E}) d'alimentation donnée, et à alimenter une ligne de sortie (2) commune du mélange voulu, tel que :
- chaque branche comporte un moyen de régulation (4) du débit du constituant considéré à une valeur constante déterminée dépendant au moins de la pression (P_{A}) d'alimentation du constituant,
- chaque branche (1) est réalisée dans un bloc (11) polyèdre en matériau étanche aux divers constituants gazeux et résistant à leur pression d'alimentation, comportant au moins deux faces planes opposées (6) où débouchent des collecteurs d'entrée et de sortie (7) au moins de la partie du circuit pneumatique constituant ladite branche
- lesdits blocs polyèdres (11) de chaque branche (1) sont réunis par assemblage d'une face plane (6) de l'un contre une face plane (6) de l'autre en faisant communiquer des orifices de collecteurs de sortie (7) commune desdites branches,
**caractérisé en ce que** :
- le dispositif comporte au moins un moyen d'arrêt (8) pilotable en fermeture et ouverture placé en aval du moyen de régulation (4) du débit de tout constituant gazeux, lequel moyen d'arrêt (8) est une électrovanne fixée directement sur une face adjacente à l'une des faces planes (6) où débouchent les collecteurs d'entrée et de sortie (7) dudit bloc (11), et reliée à une entrée (13e) et une sortie (13s) secondaires de la partie de branche (1) considérée.

2. Dispositif mélangeur suivant la revendication 1, **caractérisé en ce que** chaque branche (1) comporte en aval de son moyen de régulation de débit (4) un moyen d'arrêt (8) pilotable en durées de fermeture et d'ouverture en fonction au moins de la pression d'alimentation (P_{A}) du moyen de régulation (4) de débit placé en amont sur la même dite branche, les temps d'ouverture et de fermeture de chaque moyen d'arrêt étant variables, aptes à ajuster la quantité injectée de chaque constituant dans la ligne (2) de sortie commune du mélangeur et calculée en fonction du mélange désiré dans cette ligne.

3. Dispositif mélangeur suivant l'une des revendications 1 ou 2, **caractérisé en ce que** chaque branche (1) comporte en amont de son moyen de régulation (4) de débit un moyen de réglage (9) de la pression d'alimentation (P_{A}) de celui-ci.

4. Dispositif mélangeur selon la revendication 1, **caractérisé en ce que** chaque branche (1) comporte en amont du moyen de régulation (4) du débit dans cette branche, un moyen de réglage (9) de la pression (P_{A}) d'alimentation de celui-ci, et un moyen de pilotage (10) de ce moyen de réglage en fonction de la pression d'entrée (P_{E}) du constituant gazeux dans ce moyen de réglage, lesdits moyens de réglage et de pilotage étant aptes à fournir une pression donnée (P_{A}) d'alimentation du moyen de régulation du débit (4).

5. Dispositif mélangeur suivant l'une quelconque des revendications 1 à 4, **caractérisé en ce que** chaque moyen de régulation (4) de débit est un ajutage de restriction de la section de passage du circuit de la branche (1) considérée et qui est apte à assurer un débit sonique qui est seulement fonction de sa pression amont (P_{A}) d'alimentation.

6. Dispositif mélangeur suivant l'une quelconque des revendications 1 à 5, **caractérisé en ce que** les parties de circuit internes à chaque bloc (11) sont des conduits rectilignes percés depuis les différentes faces du bloc considéré et dont les orifices sont aptes soit à être bouchés soit à constituer des entrées ou sorties (7) de la partie de circuit interne considéré.

7. Dispositif mélangeur suivant l'une quelconque des revendications 1 à 6 et suivant l'une quelconque des revendications 2 et 3, **caractérisé en ce que** le moyen de réglage (9) de la pression d'alimentation (P_{A}) est intégré audit bloc (11).

8. Dispositif mélangeur selon l'une quelconque des revendications 1 à 7, **caractérisé en ce que** chaque bloc polyèdre (11) comporte une entrée (7_{E}) d'alimentation (3) d'un constituant gazeux et au moins deux sorties (7_{S}) de celui-ci aptes à fournir au moins deux débits différents de ce même constituant gazeux dans deux lignes de sortie distinctes, et communes avec au moins un autre bloc alimenté par un deuxième constituant gazeux et, permettant de délivrer au moins deux mélanges de constitution de gaz différente.

9. Dispositif mélangeur suivant l'une quelconque des revendications 1 à 8, **caractérisé en ce que** chaque bloc (11) est un parallélépipède rectangle.

## Patentansprüche

1. Mischvorrichtung zum Mischen mindestens zweier gasförmiger Komponenten, umfassend mindestens zwei Abschnitte (1) einer Druckluftschaltung, die parallel angeordnet und geeignet sind, jeweils eine gasförmige Komponente bei einem gegebenen Versorgungsdruck (P_{E}) aufzunehmen (3) und eine gemeinsame Ausgangsleitung (2) mit dem gewünschten Gemisch zu versorgen, wobei:
- jeder Abschnitt ein Mittel (4) zur Regelung der Durchflussmenge der betreffenden Komponente auf einen bestimmten konstanten Wert umfasst, der mindestens vom Versorgungsdruck (P_{A}) der Komponente abhängt,
- jeder Abschnitt (1) aus einem Polyederblock (11) aus einem für die verschiedenen gasförmigen Komponenten dichten Material, das ihrem Versorgungsdruck standhält, hergestellt ist, umfassend mindestens zwei gegenüberliegende ebene Flächen (6), in die Eingangs- und Ausgangskollektoren (7) von zumindest dem Teil der Druckluftschaltung münden, der den Abschnitt bildet,
- wobei die Polyederblöcke (11) jedes Abschnitts (1) durch Zusammenfügen einer ebenen Fläche (6) des einen mit einer ebenen Fläche (6) des anderen verbunden sind, wobei Öffnungen von Ausgangskollektoren (7), die den Abschnitten gemeinsam sind, in Verbindung gebracht werden,
**dadurch gekennzeichnet, dass**:
- die Vorrichtung mindestens ein Haltemittel (8) umfasst, das hinsichtlich des Öffnens und Schließens steuerbar ist und stromabwärts zum Regelmittel (4) der Durchflussmenge jeder gasförmigen Komponente angeordnet ist, wobei das Haltemittel (8) ein Magnetventil ist, das direkt auf einer an eine der ebenen Flächen (6) angrenzenden Fläche befestigt ist, in die die Eingangs- und Ausgangskollektoren (7) des Blocks (11) münden, und mit einem Nebeneingang (13e) und einem Nebenausgang (13s) des betreffenden Teils des Abschnitts (1) verbunden ist.

2. Mischvorrichtung nach Anspruch 1, **dadurch gekennzeichnet, dass** jeder Abschnitt (1) stromabwärts zu seinem Durchflussregelmittel (4) ein Haltemittel (8) umfasst, das hinsichtlich der Verschluss- und Öffnungsdauer in Abhängigkeit von mindestens dem Versorgungsdruck (P_{A}) des Durchflussregelmittels (4), das stromaufwärts auf demselben Abschnitt angeordnet ist, steuerbar ist, wobei die Öffnungs- und Verschlusszeiten jedes Haltemittels variabel und geeignet sind, die in die gemeinsame Ausgangsleitung (2) des Mischers eingespritzte und in Abhängigkeit von der in dieser Leitung gewünschten Mischung berechnete Menge anzupassen.

3. Mischvorrichtung nach einem der Ansprüche 1 oder 2, **dadurch gekennzeichnet, dass** jeder Abschnitt (1) stromaufwärts zu seinem Durchflussregelmittel (4) ein Mittel (9) zur Einstellung des Versorgungsdrucks (P_{A}) desselben umfasst.

4. Mischvorrichtung nach Anspruch 1, **dadurch gekennzeichnet, dass** jeder Abschnitt (1) stromaufwärts zu dem Durchflussregelmittel (4) in diesem Abschnitt ein Mittel (9) zur Einstellung des Versorgungsdrucks (P_{A}) desselben und ein Mittel (10) zur Steuerung dieses Einstellmittels in Abhängigkeit vom Eingangsdruck (P_{E}) der gasförmigen Komponente in diesem Einstellmittel umfasst, wobei die Einstell- und Steuermittel geeignet sind, einen gegebenen Versorgungsdruck (P_{A}) des Durchflussregelmittels (4) zu liefern.

5. Mischvorrichtung nach einem der Ansprüche 1 bis 4, **dadurch gekennzeichnet, dass** jedes Durchflussregelmittel (4) eine Düse zur Restriktion des Durchgangsquerschnitts der Schaltung des betreffenden Abschnitts (1) ist, die geeignet ist, eine kritische Strömung zu gewährleisten, die nur von seinem stromaufwärtigen Versorgungsdruck (P_{A}) abhängig ist.

6. Mischvorrichtung nach einem der Ansprüche 1 bis 5, **dadurch gekennzeichnet, dass** die Teile der Schaltung, die sich in jedem Block (11) befinden, gerade Leitungen sind, die von den verschiedenen Seiten des betreffenden Blocks aus durchbohrt sind und deren Öffnungen geeignet sind, entweder verschlossen zu werden oder Eingänge oder Ausgänge (7) für den betreffenden inneren Teil der Schaltung darzustellen.

7. Mischvorrichtung nach einem der Ansprüche 1 bis 6 und nach einem der Ansprüche 2 und 3, **dadurch gekennzeichnet, dass** das Mittel (9) zur Regelung des Versorgungsdrucks (P_{A}) in den Block (11) integriert ist.

8. Mischvorrichtung nach einem der Ansprüche 1 bis 7, **dadurch gekennzeichnet, dass** jeder Polyederblock (11) einen Eingang (7_{E}) zur Versorgung (3) einer gasförmigen Komponente und mindestens zwei Ausgänge (7_{S}) für dieselbe umfasst, die geeignet sind, mindestens zwei unterschiedliche Durchflussmengen dieser selben gasförmigen Komponente in zwei getrennten Ausgangsleitungen zu liefern, und die mit mindestens einem weiteren Block, der mit einer zweiten gasförmigen Komponente versorgt wird, gemeinsam sind und es ermöglichen, mindestens zwei Gemische mit einer unterschiedlichen Gaszusammensetzung zu liefern.

9. Mischvorrichtung nach einem der Ansprüche 1 bis 8, **dadurch gekennzeichnet, dass** jeder Block (11) ein rechteckiges Parallelepiped.

## Claims

1. Mixing device for mixing at least two gaseous components comprising at least two pneumatic circuit branches (1) arranged in parallel and each suitable for receiving (3) a gaseous component at a given supply pressure (P_{E}), and for supplying a common output line (2) with the desired mixture, such that:
- each branch comprises a means for regulating (4) the flow rate of the component concerned at a determined constant value dependent at least on the component supply pressure (P_{A}),
- each branch (1) is produced in a polyhedral block (11) of a material that is leaktight to the various gaseous components and that withstands their supply pressure, comprising at least two opposite planar faces (6) where inlet and outlet manifolds (7) at least of the part of the pneumatic circuit forming said branch open out
- said polyhedral blocks (11) of each branch (1) are joined by assembling a planar face (6) of one against a planar face (6) of the other, connecting together the common output manifold orifices (7) of said branches,
**characterized in that**:
- the device comprises at least one stop means (8), that can be controlled to be closed and opened, located downstream of the means (4) for regulating the flow rate of any gaseous component, said stop means (8) being a solenoid valve fastened directly onto a face adjacent to one of the planar faces (6) where the inlet and outlet manifolds (7) of said block (11) open out, and linked to a secondary inlet (13e) and a secondary outlet (13s) of the part of branch (1) concerned.

2. Mixing device according to Claim 1, **characterized in that** each branch (1) comprises, downstream of its flow rate regulation means (4), a stop means (8) that can be controlled in terms of closure and opening times as a function at least of the supply pressure (P_{A}) of the flow rate regulation means (4) placed upstream on the same said branch, the opening and closure times of each stop means being variable, suitable for adjusting the injected quantity of each component in the commun output line (2) of the mixer and calculated as a function of the mixture wished in this line.

3. Mixing device according to one of Claims 1 or 2, **characterized in that** each branch (1) comprises, upstream of its flow rate regulation means (4), a means (9) for adjusting the supply pressure (P_{A}) thereof.

4. Mixing device according to Claim 1, **characterized in that** each branch (1) comprises, upstream of the means (4) for regulating the flow rate in this branch, a means (9) for adjusting the supply pressure (P_{A}) thereof, and a means (10) for controlling this adjustment means as a function of the input pressure (P_{E}) of the gaseous component in this adjustment means, said adjustment and control means being suitable for providing a given supply pressure (P_{A}) for the flow rate regulation means (4).

5. Mixing device according to any one of Claims 1 to 4, **characterized in that** each flow rate regulation means (4) is a nozzle for restricting the bore section of the circuit of the branch (1) concerned and which is suitable for ensuring a sonic flow which is solely function of its upstream supply pressure (P_{A}).

6. Mixing device according to any one of Claims 1 to 5, **characterized in that** the parts of the internal circuit of each block (11) are rectilinear ducts pierced from the different faces of the block concerned and whose orifices are suitable either for plugging or for forming inlets or outlets (7) of the part of the internal circuit concerned.

7. Mixing device according to any one of Claims 1 to 6 and according to any one of Claims 2 and 3, **characterized in that** the means (9) for adjusting the supply pressure (P_{A}) is incorporated in the said block (11).

8. Mixing device according to any one of Claims 1 to 7, **characterized in that** each polyhedral block (11) comprises an inlet (7_{E}) for supplying (3) a gaseous component and at least two outlets (7_{S}) for this gaseous component suitable for supplying at least two different flow rates of this same gaseous component in two distinct output lines, which output lines are common with at least one other block supplied with a second gaseous component, making it possible to deliver at least two different gaseous mixtures.

9. Mixing device according to any one of Claims 1 to 8, **characterized in that** each block (11) is a rectangular parallelepiped.
